# EUROPEAN PATENT SPECIFICATION

(11) **EP 3 517 405 B1**
(45) Date of publication and mention of the grant of the patent: **13.01.2021**
(21) Application number: 19153451.0
(22) Date of filing: 24.01.2019
(51) Int. Cl.: B62D 5/00, B62D 6/00

(54) **STEERING CONTROL DEVICE**
LENKUNGSSTEUERUNGSVORRICHTUNG
DISPOSITIF DE COMMANDE DE DIRECTION

(30) Priority: 26.01.2018 JP 2018011980
(43) Date of publication of application: 31.07.2019
(73) Proprietor: JTEKT CORPORATION, Osaka 542-8502 (JP)
(72) Inventor: MATSUDA, Satoshi, Osaka-shi, Osaka 542-8502 (JP); NAMIKAWA, Isao, Osaka-shi, Osaka 542-8502 (JP); KAKIMOTO, Yuusuke, Osaka-shi, Osaka 542-8502 (JP); ANRAKU, Koji, Osaka-shi, Osaka 542-8502 (JP)
(74) Representative: Winter, Brandl, Fürniss, Hübner, Röss, Kaiser, Polte - Partnerschaft mbB

(56) References cited:
- EP-A1- 2 960 139
- US-A1- 2014 081 524
- US-B1- 6 408 235

## Description

### BACKGROUND OF THE INVENTION

### 1. Field of the Invention

The present invention relates to a steering control device.

### 2. Description of the Related Art

There has hitherto been known a steering control device that causes a motor to generate torque for reducing the steering speed of a steering wheel when the steering wheel is steered forth toward a steering limit at which a rack shaft reaches a rack end (Japanese Patent Application Publication No. 2008-49914 (JP 2008-49914 A)). An impact caused when the rack shaft reaches the rack end can be mitigated.

In the case where the rack end is reached before the steering speed of the steering wheel is not reduced sufficiently, the steering wheel may be moved back by a reaction force of the impact caused when the rack end is reached. In this case, the steering speed at the time when the steering wheel is moved back from the steering limit is uncontrolled. That is, the steering feel of the steering wheel may be degraded, depending on how the steering wheel is moved back.

Document US 6408235 B1 shows the preamble of claim 1 and discloses a system and method for controlling the collision between elements of an automotive rack and pinion steering apparatus and an end-of-travel stop is presented.

### SUMMARY OF THE INVENTION

It is an object of the present invention to provide a steering control device that can suppress a degradation in the steering feel, which is caused when a steering wheel is moved back from a steering limit.

An aspect of the present invention provides a steering control device that controls a steering system that includes an actuator that generates torque to be applied to a steering wheel to control operation of the actuator. The steering control device includes an angular speed control circuit that performs feedback control on the actuator in the case where a steering angle of the steering wheel reaches a steering limit of the steering angle and the steering wheel is moved back from the steering limit, the feedback control being performed such that an angular speed of a rotational angle of a rotary shaft that is convertible into the steering angle coincides with a target angular speed that is a target value for the angular speed and that is set in accordance with the rotational angle, the angular speed being computed on the basis of the rotational angle.

With this configuration, the actuator is subjected to feedback control performed such that the angular speed coincides with the target angular speed which is set in accordance with the rotational angle when the steering wheel is moved back from the steering limit. Therefore, control is performed such that the steering speed of the steering wheel does not remain uncontrolled when the steering wheel is moved back from the steering limit. Thus, a degradation in the steering feel at the time when the steering wheel is moved back from the steering limit can be suppressed.

In the above aspect, the steering control device according to the aspect described above may further include a reaction force control circuit that controls the actuator so as to make it more difficult to steer the steering wheel forth toward the steering limit as the steering angle becomes closer to the steering limit.

With this configuration, it is difficult to steer the steering wheel forth toward the steering limit, and therefore an impact caused when the steering wheel reaches the steering limit can be mitigated. Hence, with the impact mitigated, the steering speed at the time when the steering wheel starts being moved back by the impact can be suppressed. Thus, a degradation in the steering feel at the time when the steering wheel is moved back from the steering limit can be suppressed better.

In the above aspect, the angular speed control circuit may perform feedback control on the actuator such that the angular speed coincides with a target angular speed that is a target value for the angular speed and that is set in accordance with the rotational angle in the case where the steering wheel is steered forth toward the steering limit.

With this configuration, the actuator can be controlled by the angular speed control circuit such that the steering speed of the steering wheel does not remain uncontrolled not only when the steering wheel is moved back from the steering limit but also when the steering wheel is steered forth toward the steering limit. Thus, a degradation in the steering feel of the steering wheel can be suppressed better.

In the above aspect, the steering control device may further include a return determination circuit that determines whether the steering wheel is moved back from the steering limit in accordance with steering torque applied to the steering wheel and the angular speed, the steering torque having a positive value when the steering wheel is steered in a first direction along a steering direction and having a negative value when the steering wheel is steered in a second direction along the steering direction, the return determination circuit may determine that the steering wheel is moved back from the steering limit when multiplication of the steering torque and the angular speed results in a negative value, and the angular speed control circuit may perform the feedback control on condition that the return determination circuit determines that the steering wheel is moved back from the steering limit.

With this configuration, the angular speed control circuit performs feedback control when the steering wheel is moved back from the steering limit. That is, intervention of feedback control by the angular speed control circuit for a case where the steering wheel is steered forth toward the steering limit is eliminated, and a degradation in the steering feel at the time when the steering wheel is moved back from the steering limit can be suppressed with the steering speed of the steering wheel being more natural.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a schematic diagram illustrating the configuration of a steer-by-wire steering system;
FIG. 2 is a block diagram of a steering control device according to a first embodiment;
FIG. 3 is a block diagram of a target steering angle setting circuit according to the first embodiment;
FIG. 4 is a block diagram of an angular speed control circuit according to the first embodiment;
FIG. 5 is a block diagram of an angular speed control circuit of a steering control device according to a second embodiment;
FIG. 6 is a block diagram of an angular speed control circuit of a steering control device according to a third embodiment;
FIG. 7 is a block diagram of a steering control device according to a fourth embodiment; and
FIG. 8 is a schematic diagram illustrating the configuration of a steer-by-wire steering system according to a modification.

### DETAILED DESCRIPTION OF EMBODIMENTS

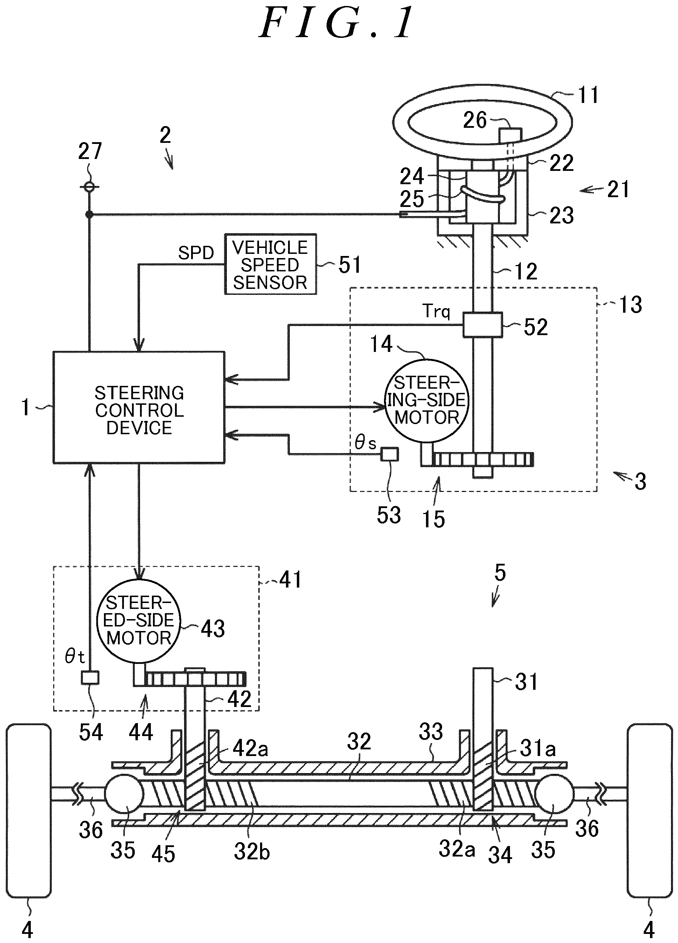

A steering control device according to a first embodiment of the present invention will be described below. As illustrated in FIG. 1, a steering control device 1 controls a steer-by-wire steering system 2 that includes a steering-side actuator 13 that generates a steering reaction force as torque to be applied to a steering wheel 11. The steer-by-wire steering system 2 includes a steering device 3 that is operated by a driver, and a steering operation device 5 that steers steered wheels 4 in accordance with an operation on the steering device 3 by the driver. The steer-by-wire steering system 2 is a linkless steer-by-wire steering system that has a structure in which the steering device 3 and the steering operation device 5 are not mechanically connected to each other.

The steering device 3 includes a steering shaft 12 as a rotary shaft to which the steering wheel 11 is fixed so as to be rotatable together therewith, and the steering-side actuator 13 which applies a steering reaction force to the steering shaft 12. The steering-side actuator 13 includes a steering-side motor 14 that serves as a drive source, and a steering-side speed reducer 15 that transfers rotation of the steering-side motor 14 to the steering shaft 12 with the speed of the rotation reduced.

A spiral cable device 21 is coupled to the steering wheel 11. The spiral cable device 21 includes: a first housing 22 fixed to the steering wheel 11; a second housing 23 fixed to the vehicle body; a tubular member 24 fixed to the second housing 23 and housed in a space defined by the first housing 22 and the second housing 23; and a spiral cable 25 wound around the tubular member 24. The steering shaft 12 is inserted through the tubular member 24. The spiral cable 25 is an electrical wire that connects between various switches 26 including a horn switch fixed to the steering wheel 11 and an in-vehicle power source 27 or the like fixed to the vehicle body. The spiral cable 25 is set to be sufficiently longer than the distance between the various switches 26 and the in-vehicle power source 27, and permits rotation of the steering wheel 11 in a range corresponding to the length of the spiral cable 25.

The steering operation device 5 includes: a first pinion shaft 31; a rack shaft 32 coupled to the first pinion shaft 31; and a rack housing 33 that houses the rack shaft 32 so that the rack shaft 32 is reciprocally movable. The first pinion shaft 31 and the rack shaft 32 are disposed with a predetermined intersection angle therebetween. First pinion teeth 31a formed on the first pinion shaft 31 and first rack teeth 32a formed on the rack shaft 32 are meshed with each other to constitute a first rack-and-pinion mechanism 34. One end side of the rack shaft 32 in the axial direction is supported by the first rack-and-pinion mechanism 34 so as to be reciprocally movable. Tie rods 36 are coupled to both ends of the rack shaft 32 via ball joints 35, and the distal ends of the tie rods 36 are coupled to knuckles (not illustrated) to which the steered wheels 4 are assembled.

The steering operation device 5 also includes a second pinion shaft 42, and a steered-side actuator 41 that applies a steering force for steering the steered wheels 4 to the rack shaft 32 via the second pinion shaft 42. The steered-side actuator 41 includes a steered-side motor 43 that serves as a drive source, and a steered-side speed reducer 44 that transfers rotation of the steered-side motor 43 to the second pinion shaft 42 with the speed of the rotation reduced. The second pinion shaft 42 and the rack shaft 32 are disposed with a predetermined intersection angle therebetween. Second pinion teeth 42a formed on the second pinion shaft 42 and second rack teeth 32b formed on the rack shaft 32 are meshed with each other to constitute a second rack-and-pinion mechanism 45.

In the thus configured steer-by-wire steering system 2, the second pinion shaft 42 is rotationally driven by the steered-side actuator 41 in accordance with an operation on the steering wheel 11 by the driver, and rotation of the second pinion shaft 42 is converted into reciprocal motion of the rack shaft 32 in the axial direction by the second rack-and-pinion mechanism 45. Hence, the steered angle of the steered wheels 4 is changed.

The steering control device 1 is connected to the steering-side actuator 13 and the steered-side actuator 41 to control operation of the steering-side actuator 13 and the steered-side actuator 41. The steering control device 1 includes a central processing unit (CPU) and a memory (both not illustrated), and various types of control are executed with the CPU executing a program stored in the memory in predetermined computation cycles.

A vehicle speed sensor 51 that detects a vehicle speed SPD of the vehicle and a torque sensor 52 that detects steering torque Trq applied to the steering shaft 12 are connected to the steering control device 1. The torque sensor 52 is provided on the steering shaft 12 on the steering wheel 11 side with respect to a portion at which the steering shaft 12 is coupled to the speed reduction mechanism 15. A steering-side rotational angle sensor 53 that detects a rotational angle θs of the steering-side motor 14 as a detection value that indicates the steering amount of the steering device 3 and a steered-side rotational angle sensor 54 that detects a rotational angle θt of the steered-side motor 43 as a detection value that indicates the steering operation amount of the steering operation device 5 are also connected to the steering control device 1. The steering control device 1 controls operation of the steering-side motor 14 and the steered-side motor 43 on the basis of the various state amounts, namely the vehicle speed SPD, the steering torque Trq, and the rotational angles θs and θt. The steering torque Trq and the rotational angles θs and θt are each detected as a positive value in the case where the steering wheel 11 is steered in a first direction (clockwise direction in the present embodiment), and as a negative value in the case where the steering wheel 11 is steered in a second direction (counterclockwise direction in the present embodiment).

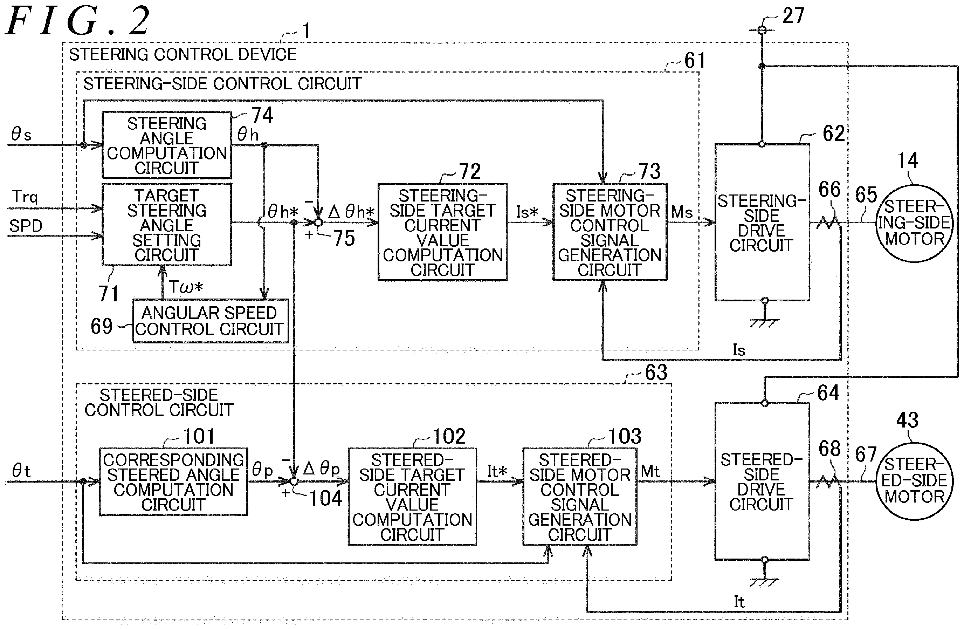

The electric configuration of the steering control device 1 will be described. As illustrated in FIG. 2, the steering control device 1 includes a steering-side control circuit 61 that outputs a steering-side motor control signal Ms, and a steering-side drive circuit 62 that supplies drive electric power to the steering-side motor 14 on the basis of the steering-side motor control signal Ms. The steering control device 1 also includes a steered-side control circuit 63 that outputs a steered-side motor control signal Mt, and a steered-side drive circuit 64 that supplies drive electric power to the steered-side motor 43 on the basis of the steered-side motor control signal Mt. A well-known PWM inverter having a plurality of switching elements is adopted as the steering-side drive circuit 62 and the steered-side drive circuit 64 according to the present embodiment. The steering-side motor control signal Ms and the steered-side motor control signal Mt are each a gate on/off signal that prescribes the on/off state of each of the switching elements of the steering-side drive circuit 62 and the steered-side drive circuit 64. The steering control device 1 generates the steering-side motor control signal Ms and the steered-side motor control signal Mt by executing various computation processes indicated by various control blocks to be described below in predetermined computation cycles. When the steering-side motor control signal Ms and the steered-side motor control signal Mt are output to the steering-side drive circuit 62 and the steered-side drive circuit 64, the switching elements are turned on and off so that drive electric power is supplied from the in-vehicle power source 27 to the steering-side motor 14 and the steered-side motor 43. Consequently, operation of the steering-side actuator 13 and the steered-side actuator 41 is controlled.

Next, the steering-side control circuit 61 will be described.

The steering-side control circuit 61 receives, as inputs, the vehicle speed SPD, the steering torque Trq, and the rotational angle θs. The steering-side control circuit 61 also receives, as an input, a current value Is of the steering-side motor 14 detected by a current sensor 66 provided in a connection line 65 between the steering-side drive circuit 62 and motor coils of the steering-side motor 14. The steering-side control circuit 61 generates the steering-side motor control signal Ms on the basis of the various state amounts, namely the vehicle speed SPD, the steering torque Trq, the rotational angle 0s, and the current value Is, and outputs the steering-side motor control signal Ms. A three-phase brushless motor is adopted as the steering-side motor 14. Therefore, the connection line 65 should be connected to each of the motor coils of the steering-side motor 14 for the respective phases. For convenience of illustration, however, only one connection line 65 is illustrated representatively.

The steering-side control circuit 61 includes: a target steering angle setting circuit 71 that computes a target steering angle θh*; a steering-side target current value computation circuit 72 that computes a steering-side target current value Is* on the basis of the target steering angle θh*; and a steering-side motor control signal generation circuit 73 that generates the steering-side motor control signal Ms on the basis of the steering-side target current value Is*. The steering-side control circuit 61 also includes a steering angle computation circuit 74 that computes a steering angle θh of the steering wheel 11 on the basis of the rotational angle θs of the steering-side motor 14. The steering-side control circuit 61 further includes an angular speed control circuit 69 that computes correction torque Tω* on the basis of the steering angle θh. The steering angle computation circuit 74 acquires the input rotational angle θs as converted into an absolute angle in a range exceeding 360° by counting the number of rotations of the steering-side motor 14 from the steering neutral of the steering wheel 11, for example. Then, the steering angle computation circuit 74 computes the steering angle θh by multiplying the rotational angle, which has been converted into an absolute angle, by a conversion coefficient Ks based on the rotational speed ratio of the steering-side speed reducer 15. The steering angle θh is an example of the rotational angle in the claims, and is detected as a positive value in the case where the steering wheel 11 is steered in the first direction (clockwise direction in the present embodiment) with reference to the steering neutral of the steering wheel 11, and as a negative value in the case where the steering wheel 11 is steered in the second direction (counterclockwise direction in the present embodiment). The steering neutral refers to the position of the steering wheel 11 at the time when the vehicle is traveling straight. The target steering angle θh* is the target value for the steering angle θh.

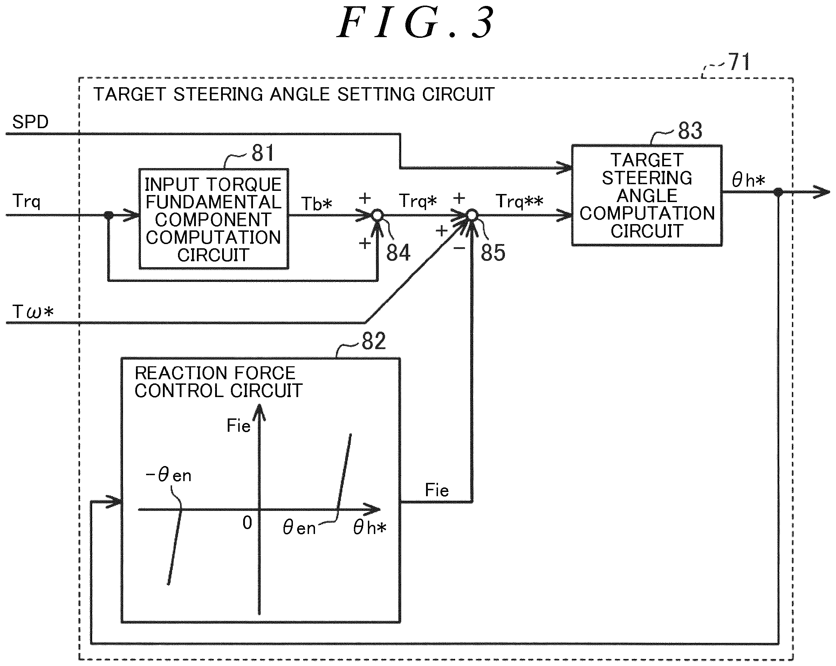

As illustrated in FIG. 3, the target steering angle setting circuit 71 includes: an input torque fundamental component computation circuit 81 to which the steering torque Trq is input; a reaction force control circuit 82 that computes a reaction force component Fie that increases a steering reaction force; and a target steering angle computation circuit 83 that computes the target steering angle θh*. The input torque fundamental component computation circuit 81 computes an input torque fundamental component (reaction force fundamental component) Tb* that has an absolute value that becomes larger as the absolute value of the steering torque Trq becomes larger. The input torque fundamental component Tb* is output to an adder 84. The adder 84 computes input torque Trq* by adding the steering torque Trq to the input torque fundamental component Tb*.

The reaction force control circuit 82 computes the reaction force component Fie by referencing a map illustrated in the drawing on the basis of the target steering angle θh*. A threshold angle θen is set in the map. In the case where the absolute value of the target steering angle θh* is equal to or less than the threshold angle θen, the reaction force component Fie is computed as zero. When the target steering angle θh* is more than the threshold angle θen, the reaction force component Fie is computed as having an absolute value that is more than zero. The reaction force component Fie is set to have such a large absolute value that the steering wheel 11 cannot be steered forth any further with human power when the target steering angle θh* is larger than the threshold angle θen by a certain degree. In other words, the reaction force component Fie makes it more difficult to steer the steering wheel 11 forth toward the steering limit as the steering wheel 11 is steered closer to the steering limit.

In relation to the mechanical configuration of the steering operation device 5, the threshold angle θen according to the present embodiment is set to a value of a corresponding steered angle θp in the vicinity of a virtual rack end positioned further on the steering neutral side, by a predetermined angle, with respect to a virtual rack end set on the steering neutral side with respect to a mechanical rack end at which movement of the rack shaft 32 in the axial direction is regulated with the ball joint 35 abutting against the rack housing 33. In relation to the mechanical configuration of the steering device 3, meanwhile, the threshold angle θen is set on the steering neutral side with respect to the maximum steering angle θh of the steering wheel 11 permitted by the spiral cable device 21. That is, in the steer-by-wire steering system 2 according to the present embodiment, a position in the vicinity of the virtual rack end is set as a steering angle limit of the steering operation device 5, a position corresponding to the maximum steering angle θh of the steering wheel 11 permitted by the spiral cable device 21 is set as a steering angle limit of the steering device 3, and the steered wheels 4 reach the steering angle limit before the steering device 3 reaches the steering angle limit in the case where it is assumed that the first pinion shaft 31 is coupled to the steering shaft 12. The virtual rack end is an example of the steering limit.

An adder/subtractor 85 receives, as inputs, the input torque Trq* and the correction torque Tω*, which is computed by the angular speed control circuit 69, in addition to the reaction force component Fie, which is computed by the reaction force control circuit 82. Corrected input torque Trq** obtained by the adder/subtractor 85 adding the correction torque Tω* to a value obtained by subtracting the reaction force component Fie from the input torque Trq* is output to the target steering angle computation circuit 83.

The target steering angle computation circuit 83 computes the target steering angle θh* using a model formula that correlates the corrected input torque Trq** and the target steering angle θh* with each other. This model formula defines and represents the relationship between torque of a rotary shaft that rotates along with rotation of the steering wheel 11 and a rotational angle in a construction in which the steering wheel 11 and the steered wheels 4 are mechanically coupled to each other, and represents such relationship using a viscosity coefficient C obtained by modeling the friction etc. of the steer-by-wire steering system 2 and an inertia coefficient J obtained by modeling the inertia of the steer-by-wire steering system 2. The viscosity coefficient C and the inertia coefficient J are set so as to be variable in accordance with the vehicle speed SPD.

As illustrated in FIG. 2, the steering-side target current value computation circuit 72 receives, as an input, an angle deviation Δθh obtained by a subtractor 75 subtracting the steering angle θh from the target steering angle θh*. The steering-side target current value computation circuit 72 computes the steering-side target current value Is*, which is the target value for a drive current corresponding to the steering reaction force generated by the steering-side motor 14, as a control amount for performing feedback control so as to bring the steering angle θh to the target steering angle θh* on the basis of the angle deviation Δθh.

The steering-side motor control signal generation circuit 73 receives, as inputs, the steering-side target current value Is*, the rotational angle θs, and the current value Is. The steering-side motor control signal generation circuit 73 computes the steering-side motor control signal Ms to be output to the steering-side drive circuit 62 by executing current feedback control in a dq coordinate system on the basis of such state amounts. Consequently, drive electric power that matches the steering-side motor control signal Ms is output from the steering-side drive circuit 62 to the steering-side motor 14 to control operation of the steering-side motor 14.

Next, the steered-side control circuit 63 will be described. The steered-side control circuit 63 receives, as inputs, the rotational angle 0t and the target steering angle θh*. The steered-side control circuit 63 also receives, as an input, a current value It of the steered-side motor 43 detected by a current sensor 68 provided in a connection line 67 between the steered-side drive circuit 64 and motor coils of the steered-side motor 43. The steered-side control circuit 63 generates the steered-side motor control signal Mt on the basis of the various state amounts, namely the rotational angle θt, the target steering angle θh*, and the current value It, and outputs the steered-side motor control signal Mt. A three-phase brushless motor is adopted as the steered-side motor 43. Therefore, the connection line 67 should be connected to each of the motor coils of the steered-side motor 43 for the respective phases. For convenience of illustration, however, only one connection line 67 is illustrated representatively.

The steered-side control circuit 63 includes a steered-side target current value computation circuit 102 that computes a steered-side target current value It* on the basis of the target steering angle θh*, and a steered-side motor control signal generation circuit 103 that generates the steered-side motor control signal Mt on the basis of the steered-side target current value It*. The steered-side control circuit 63 also includes a corresponding steered angle computation circuit 101 that computes the corresponding steered angle θp of the first pinion shaft 31, which is a rotary shaft that enables conversion into the steered angle of the steered wheels 4, on the basis of the rotational angle θt of the steered-side motor 43. The steered-side control circuit 63 acquires the input rotational angle θt as converted into an absolute angle in a range exceeding 360° by counting the number of rotations of the steered-side motor 43 from the steering neutral, for example. Then, the corresponding steered angle computation circuit 101 computes the corresponding steered angle θp by multiplying the rotational angle, which has been converted into an absolute angle, by a conversion coefficient Kt based on the rotational speed ratio of the steered-side speed reducer 44 and the rotational speed ratio of the first and second rack-and-pinion mechanisms 34 and 45. That is, the corresponding steered angle θp basically coincides with the steering angle θh of the steering wheel 11 for a case where it is assumed that the first pinion shaft 31 is mechanically coupled to the steering shaft 12.

The steered-side target current value computation circuit 102 receives, as an input, an angle deviation Δθp obtained by a subtractor 104 subtracting the corresponding steered angle θp from the target steering angle θh*. Then, the steered-side target current value computation circuit 102 computes the steered-side target current value It*, which is the target value for a drive current corresponding to the steering force generated by the steered-side motor 43, as a control amount for performing feedback control so as to bring the corresponding steered angle θp to the target steering angle θh* on the basis of the angle deviation Δθp. That is, in the present embodiment, the target value for the corresponding steered angle θp is equal to the target steering angle θh* which is the target value for the steering angle θh, and the steering angle ratio which is the ratio between the steering angle θh and the corresponding steered angle θp is set to be constant.

The steered-side target current value It*, the rotational angle θt, and the current value It are input to the steered-side motor control signal generation circuit 103. The steered-side motor control signal generation circuit 103 generates the steered-side motor control signal Mt to be output to the steered-side drive circuit 64 by performing current feedback control in a dq coordinate system on the basis of the various state amounts, namely the steered-side target current value It*, the rotational angle θt, and the current value It. Consequently, drive electric power that matches the steered-side motor control signal Mt is output from the steered-side drive circuit 64 to the steered-side motor 43 to control operation of the steered-side motor 43.

In the steer-by-wire steering system 2 described above, in the case where the steering wheel 11 is further steered forth toward the virtual rack end after the target steering angle θh* for the steering wheel 11 exceeds the threshold angle θen, the reaction force control circuit 82 computes the reaction force component Fie which as an absolute value that is more than zero, and therefore it is difficult to steer the steering wheel 11 forth toward the virtual rack end. However, it is conceivable that the steering wheel 11 reaches the virtual rack end depending on the status of steering of the steering wheel 11. Therefore, it is conceivable that a rebound feel is caused when the steering wheel 11 is moved back by the reaction force of an impact caused when the virtual rack end is reached, and that the steering feel of the steering wheel 11 is degraded. In the present embodiment, the steering control device 1 is provided with the angular speed control circuit 69 as a component that suppresses such a rebound feel.

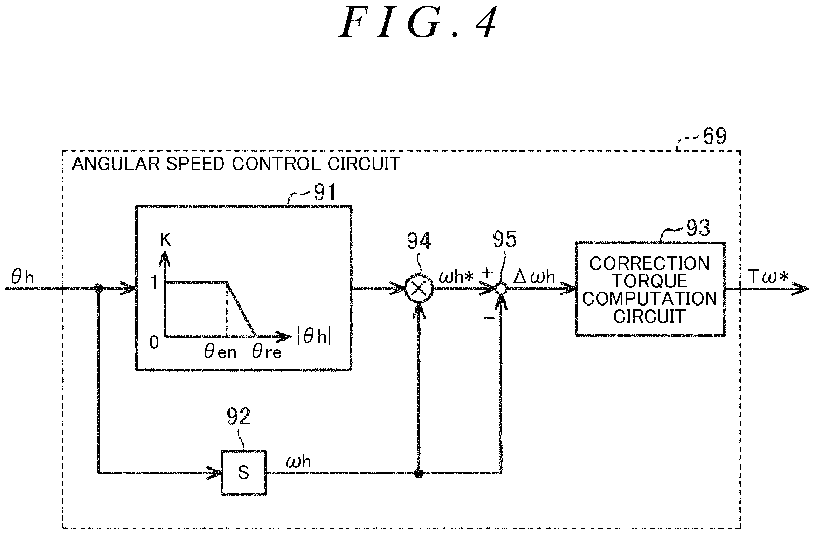

As illustrated in FIG. 4, the steering angle θh is input to the angular speed control circuit 69. The angular speed control circuit 69 computes the correction torque Tω* for performing feedback control on the steering-side motor 14 such that a steering speed ωh as an angular speed computed in accordance with the steering angle θh coincides with a target steering speed ωh* as a target angular speed which is the target value for the steering speed ωh. The angular speed control circuit 69 includes: a gain computation circuit 91 that computes a gain K for computing the target steering speed ωh* in accordance with the steering angle θh; a differentiator 92 that computes the steering speed coh by differentiating the steering angle θh; and a correction torque computation circuit 93 that computes the correction torque Tω*.

The gain computation circuit 91 computes the gain K by referencing a map illustrated in the drawing on the basis of the steering angle θh. The threshold angle θen which is similar to that for the reaction force control circuit 82 is set in the map. In the map, the gain K is constant when the absolute value of the steering angle θh is equal to or less than the threshold angle θen, and the gain K gradually becomes smaller as the absolute value of the steering angle θh is varied from the threshold angle θen toward a steering angle θre corresponding to the virtual rack end. Therefore, the gain computation circuit 91 computes the gain K as one in the case where the absolute value of the steering angle θh is equal to or less than the threshold angle θen, computes the gain K as a value that is less than one in the case where the steering angle θh is more than the threshold angle θen, and computes the gain K as zero in the case where the steering angle θh is the steering angle θre corresponding to the virtual rack end.

The correction torque computation circuit 93 receives, as an input, an angular speed deviation Δωh computed by a subtractor 95 subtracting the steering speed coh from the target steering speed ωh* which is computed by a multiplier 94 multiplying the gain K and the steering speed ωh. The correction torque computation circuit 93 computes the correction torque Tω* corresponding to torque generated from the steering-side motor 14 such that the steering speed ωh coincides with the target steering speed ωh* on the basis of the angular speed deviation Δωh. Since the gain K is set in accordance with the absolute value of the steering angle θh, the target steering speed ωh* is also computed as a value that is equivalent to the steering speed ωh in the case where the absolute value of the steering angle θh is equal to or less than the threshold angle θen, computed as having an absolute value that gradually becomes smaller in the case where the absolute value of the steering angle θh is more than the threshold angle θen, and computed as zero in the case where the steering angle θh is the steering angle θre corresponding to the virtual rack end.

The technical significance of the characteristics of the gain K will be described. The gain K is set such that the steering speed ωh gradually becomes lower in the case where the steering wheel 11 is steered forth toward the virtual rack end in the vicinity of the virtual rack end (region between the threshold angle θen and the steering angle θre corresponding to the virtual rack end). The gain K is also set such that the target steering speed ωh* is set so as to achieve the steering speed ωh at which the rebound feel can be suppressed by the friction of gears of the steering-side speed reducer 15 etc. of the steer-by-wire steering system 2 in the case where the steering wheel 11 is moved back after the virtual rack end is reached. That is, the correction torque Tω* which is computed using the gain K according to the present embodiment is set as torque generated by the steering-side motor 14 such that the steering speed ωh gradually becomes lower in the case where the steering wheel 11 is steered forth toward the virtual rack end in the vicinity of the virtual rack end. In addition, the correction torque Tω* is also set as torque generated by the steering-side motor 14 such that the steering speed ωh is so low that the rebound feel can be suppressed by the friction of gears of the steering-side speed reducer 15 etc. in the case where the steering wheel 11 is moved back after the steering wheel 11 reaches the virtual rack end.

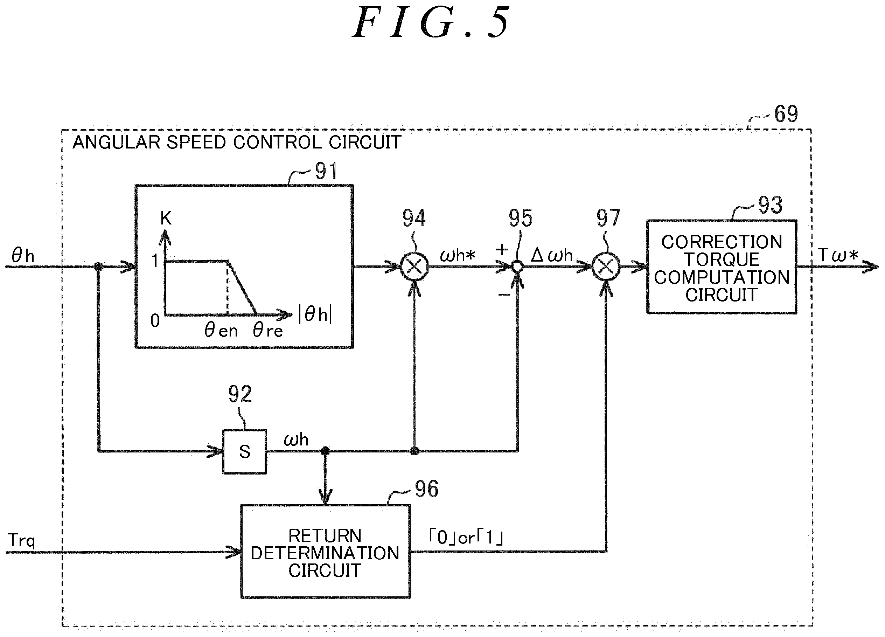

The functions and the effects of the present embodiment will be described.
(1) The steering-side actuator 13 is subjected to feedback control such that the steering speed ωh coincides with the target steering speed ωh* when the steering wheel 11 is moved back from the virtual rack end. Therefore, control is performed such that the steering speed ωh of the steering wheel 11 does not remain uncontrolled when the steering wheel 11 is moved back from the virtual rack end. Specifically, in the present embodiment, the steering-side actuator 13 is controlled by the angular speed control circuit 69 so as to reduce the steering speed ωh at the time when the steering wheel 11 is moved back after reaching the virtual rack end, and therefore the rebound feel of the steering wheel 11 can be suppressed. Thus, a degradation in the steering feel at the time when the steering wheel 11 is moved back from the virtual rack end can be suppressed.
(2) It is difficult to steer the steering wheel 11 forth toward the virtual rack end, and therefore an impact caused when the steering wheel 11 reaches the virtual rack end can be mitigated. Hence, with the impact mitigated, the steering speed ω at the time when the steering wheel 11 starts being moved back by the impact can be suppressed. Thus, a degradation in the steering feel at the time when the steering wheel 11 is moved back from the virtual rack end can be further suppressed.
(3) The steering-side actuator 13 (steering-side motor 14) can be controlled by the angular speed control circuit 69 such that the steering speed ω of the steering wheel 11 does not remain uncontrolled not only when the steering wheel 11 is moved back from the virtual rack end but also when the steering wheel 11 is steered forth toward the virtual rack end. Thus, a degradation in the steering feel of the steering wheel 11 can be more appropriately suppressed.
   A steering control device according to a second embodiment will be described below. With the second embodiment, as with the first embodiment, the rebound feel at the time when the steering wheel 11 is moved back from the virtual rack end can be suppressed. The second embodiment is different from the first embodiment in that the angular speed control circuit 69 performs feedback control on the steering-side actuator 13 only when the steering wheel 11 is moved back from the virtual rack end. Such a difference will be mainly described. Components that are the same as those according to the first embodiment are denoted by the same reference numerals.
   As illustrated in FIG. 5, the angular speed control circuit 69 further includes a return determination circuit 96. The steering speed ωh and the steering torque Trq are input to the return determination circuit 96. The return determination circuit 96 outputs one when the steering wheel 11 is steered back, and outputs zero when the steering wheel 11 is steered forth. A multiplier 97 multiplies the angular speed deviation Δωh by the output value. That is, the angular speed control circuit 69 performs feedback control on condition that the return determination circuit 96 determines that the steering wheel 11 is steered back.
   Determination made by the return determination circuit 96 as to steering back and forth of the steering wheel 11 will be described. A state in which the steering wheel 11 is steered in a first direction (clockwise direction in the present embodiment) with reference to the steering neutral, for example, is considered. That is, a time when the steering torque Trq has a positive value is considered. If it is assumed that the steering wheel 11 is steered forth toward the virtual rack end, for example, in this state, the steering angle θh becomes larger in the first direction with reference to the steering neutral. That is, the steering speed ωh which is computed by the differentiator 92 has a positive value. Therefore, multiplication of the steering torque Trq and the steering speed ωh results in a positive value. Meanwhile, in the case where the steering wheel 11 is moved back after reaching the virtual rack end, for example, the steering torque Trq has a positive value in order to maintain a state in which the steering wheel 11 is steered forth toward the virtual rack end. However, the absolute value of the steering angle θh becomes smaller since the steering wheel 11 is moved back from the virtual rack end. That is, the steering speed ωh which is computed by the differentiator 92 has a negative value. Therefore, multiplication of the steering torque Trq and the steering speed ωh results in a negative value.
   A state in which the steering wheel 11 is steered in a second direction (counterclockwise direction in the present embodiment) with reference to the steering neutral, for example, is considered. That is, a time when the steering torque Trq has a negative value is considered. If it is assumed that the steering wheel 11 is steered forth toward the virtual rack end, for example, in this state, the steering angle θh becomes larger in the second direction with reference to the steering neutral. That is, the steering speed ωh which is computed by the differentiator 92 has a negative value. Therefore, multiplication of the steering torque Trq and the steering speed ωh results in a positive value. Meanwhile, in the case where the steering wheel 11 is moved back after reaching the virtual rack end, for example, the steering torque Trq has a negative value in order to maintain a state in which the steering wheel 11 is steered forth toward the virtual rack end. However, the absolute value of the steering angle θh becomes larger since the steering wheel 11 is moved back from the virtual rack end. That is, the steering speed coh which is computed by the differentiator 92 has a positive value. Therefore, multiplication of the steering torque Trq and the steering speed ωh results in a negative value.
   That is, the return determination circuit 96 determines that the steering wheel 11 is steered forth toward the virtual rack end in the case where the result of multiplying the steering torque Trq and the steering speed ωh is positive, and determines that the steering wheel 11 is moved back from the virtual rack end in the case where the result of multiplying the steering torque Trq and the steering speed ωh is negative.
   According to the present embodiment, the following effect can be obtained in addition to the effects (1) and (2) described above.
(4) The angular speed control circuit 69 performs feedback control when the steering wheel 11 is moved back from the virtual rack end. That is, intervention of feedback control by the angular speed control circuit 69 for a case where the steering wheel 11 is steered forth toward the virtual rack end is eliminated, and a degradation in the steering feel at the time when the steering wheel 11 is moved back from the virtual rack end can be suppressed with the steering speed ω of the steering wheel 11 being more natural.

A steering control device according to a third embodiment will be described below. With the present embodiment, as with the first and second embodiments, the rebound feel at the time when the steering wheel 11 is moved back from the virtual rack end can be suppressed. The present embodiment is different from the second embodiment in that the target steering speed ωh* is set directly in accordance with the steering angle θh. Such a difference will be mainly described. Components that are the same as those according to the first and second embodiments are denoted by the same reference numerals.

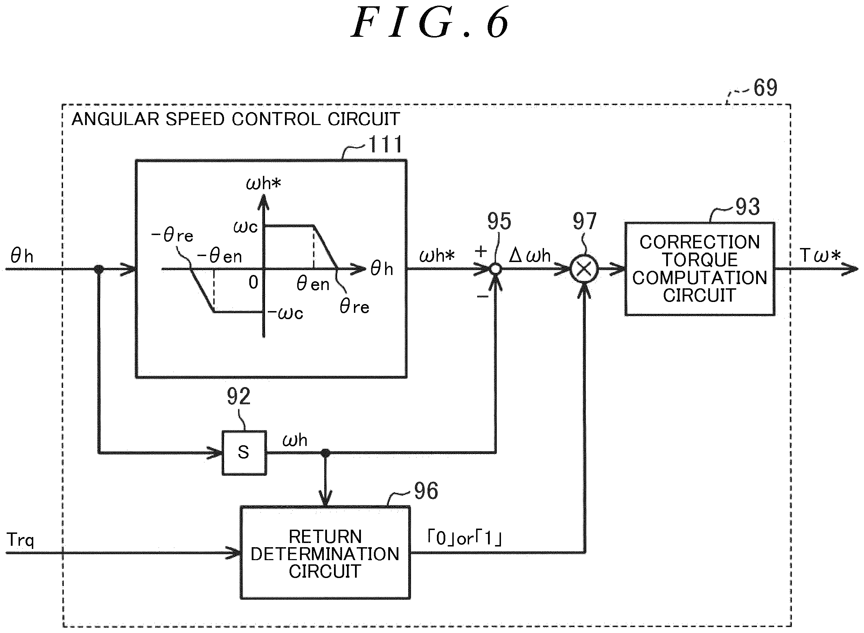

In the angular speed control circuit 69, as illustrated in FIG. 6, the gain computation circuit 91 according to the first and second embodiments is replaced with a target steering speed computation circuit 111. The target steering speed computation circuit 111 computes the target steering speed ωh* by referencing a map illustrated in the drawing on the basis of the steering angle θh. In the map, the target steering speed ωh* is set to a positive value in the case where the steering angle θh has a positive value, and set to a negative value in the case where the steering angle θh has a negative value. The threshold angle θen which is the same as that for the reaction force control circuit 82 is set in the map. In the map, the absolute value of the target steering speed ωh* is constant when the absolute value of the steering angle θh is equal to or less than the threshold angle θen, and the absolute value of the target steering speed ωh* gradually becomes smaller as the absolute value of the steering angle θh is varied from the threshold angle θen toward the steering angle θre corresponding to the virtual rack end. Therefore, the target steering speed computation circuit 111 computes the target steering speed ωh* as an absolute value ωc in the case where the absolute value of the steering angle θh is equal to or less than the threshold angle θen, computes the target steering speed ωh* as a value that is less than the absolute value ωc in the case where the steering angle θh is more than the threshold angle θen, and computes the target steering speed ωh* as zero in the case where the steering angle θh is the steering angle θre corresponding to the virtual rack end.

As in the first and second embodiments, the target steering speed ωh* is set so as to achieve the steering speed ωh at which the rebound feel can be suppressed by the friction of gears of the steering-side speed reducer 15 etc. of the steer-by-wire steering system 2 in the case where the steering wheel 11 is moved back from the virtual rack end in the vicinity of the virtual rack end.

A steering control device according to a fourth embodiment will be described below. With the present embodiment, as with the first, second, and third embodiments, the rebound feel at the time when the steering wheel 11 is moved back from the virtual rack end can be suppressed. The present embodiment is different from the first, second, and third embodiments in that the steering control device 1 controls an electric power steering system in which the steering device 3 and the steering operation device 5 are mechanically coupled to each other. Such a difference will be mainly described. Components that are the same as those according to the embodiments discussed earlier are denoted by the same reference numerals.

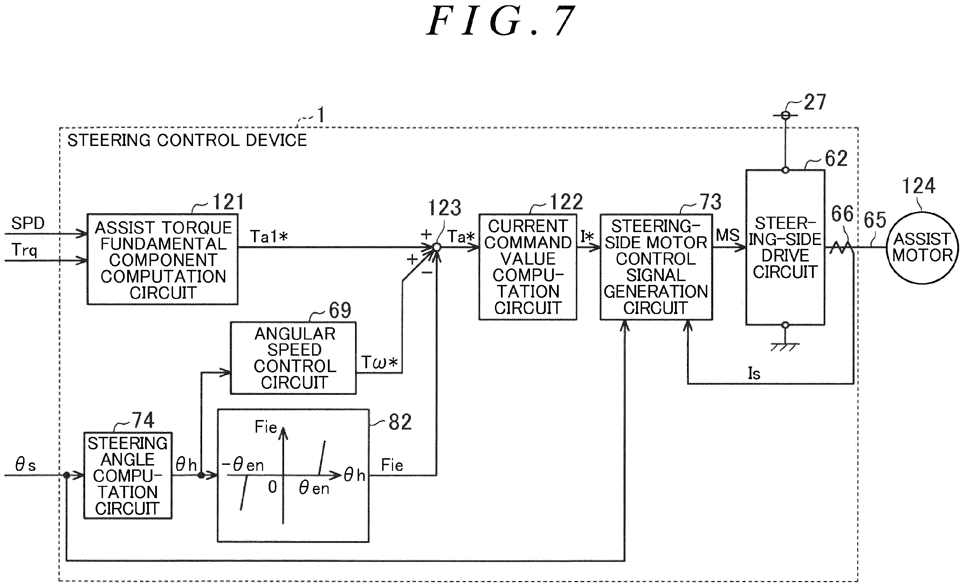

As illustrated in FIG. 7, the steering control device 1 controls operation of an assist motor 124 that generates assist torque to be applied to the steering wheel 11, in place of the steering-side motor 14.

The steering control device 1 includes an assist torque fundamental component computation circuit 121 and a current command value computation circuit 122. The steering torque Trq and the vehicle speed SPD are input to the assist torque fundamental component computation circuit 121. The assist torque fundamental component computation circuit 121 computes an assist torque fundamental component Ta1* on the basis of the steering torque Trq and the vehicle speed SPD.

The angular speed control circuit 69 computes the correction torque Tω* on the basis of the steering angle θh. The angular speed control circuit 69 may be any of the angular speed control circuits 69 according to the first, second, and third embodiments. The reaction force control circuit 82 computes the reaction force component Fie in accordance with the steering angle θh. The reaction force component Fie according to the present embodiment is a component that reduces an assist force. In other words, the reaction force component Fie makes it more difficult to steer the steering wheel 11 forth toward the steering limit as the steering wheel 11 is steered closer to the virtual rack end.

Corrected assist torque Ta* is computed by an adder/subtractor 123 adding the correction torque Tω* to the assist torque fundamental component Ta1* and subtracting the reaction force component Fie therefrom. The current command value computation circuit 122 computes a target current command value I* for driving the assist motor 124 on the basis of the corrected assist torque Ta*. The steering-side motor control signal generation circuit 73 and the steering-side drive circuit 62 discussed earlier are controlled on the basis of the target current command value I* to control operation of the assist motor 124. With such an electric power steering system, effects that are similar to those obtained with the first, second, and third embodiments can be obtained.

Each of the embodiments described above can be implemented in the modified forms described below. The embodiments and the following modifications can be implemented in combination with each other as long as there is no technical contradiction.

In the second and third embodiments, the return determination circuit 96 may determine whether or not the steering wheel 11 is steered back in accordance with the steering angle θh and a differential value of the steering torque Trq. In each of the embodiments described above, in addition, the first direction and the second direction as the steering direction of the steering wheel 11 are defined as the clockwise direction and the counterclockwise direction, respectively. However, the first direction and the second direction may be defined as the counterclockwise direction and the clockwise direction, respectively.

In the first, second, and third embodiments, the steering reaction force is increased on the basis of the reaction force component Fie when the target steering angle θh* is more than the threshold angle θen. However, the steering angle θh or the corresponding steered angle θp may be input to the reaction force control circuit 82, and the steering reaction force may be increased in accordance with the reaction force component Fie in the case where the steering angle θh or the corresponding steered angle θp is more than the threshold angle θen, for example. Alternatively, the steering reaction force may be increased on the basis of the reaction force component Fie in the case where a target corresponding steered angle or the corresponding steered angle θp is more than the threshold angle θen, for example. Also in the fourth embodiment, similarly, the reaction force component Fie for reducing an assist force may be computed in the case where the corresponding steered angle θp is more than the threshold angle θen. The target corresponding steered angle is the target value for the corresponding steered angle θp which is set on the basis of the target steering angle θh* in the case where the steering angle ratio is set so as to be variable.

In the first, second, and third embodiments, further, the steering angle ratio between the steering angle θh and the corresponding steered angle θp may be variable. In this case, a comparison may be made between one of the target steering angle θh* and the steering angle θh and one of the target corresponding steered angle and the corresponding steered angle θp to determine which is the larger, and the steering reaction force may be increased in accordance with the reaction force component Fie in the case where the larger is more than the threshold angle θen.

In the first, second, and third embodiments, the threshold angle θen is set to a value of the corresponding steered angle θp in the vicinity of the virtual rack end. However, the present invention is not limited thereto, and the threshold angle θen may be set to the steering angle θh which is positioned on the steering neutral side with respect to the steering angle limit of the steering device 3 in the case where the absolute value of the corresponding steered angle θp in the vicinity of the virtual rack end is larger than the absolute value of the steering angle θh at the steering angle limit of the steering device 3, for example.

In each of the embodiments described above, the reaction force control circuit 82 may be omitted. In such a case, there is no virtual rack end, and therefore the steering limit may be modified as follows. In a state in which the reaction force control circuit 82 is omitted and there is no virtual rack end in the first, second, and third embodiments, there is no steering limit for the steering wheel 11 and the steering shaft 12. Therefore, a rotation regulation portion that mechanically regulates rotation of the steering shaft 12 of the steering device 3 is provided for the steering shaft 12. The rotation regulation portion regulates the number of rotations of the steering wheel 11 which is set in accordance with the product specifications of the steer-by-wire steering system 2. In this case, a position at which rotation is regulated by the rotation regulation portion with a steering end, which is the limit of the number of rotations of the steering wheel 11, reached is defined as the steering limit. In this event, the steering limit is set on the steering neutral side with respect to a position corresponding to the maximum steering angle θh of the steering wheel 11 permitted by the spiral cable device 21, that is, in the vicinity of the steering end.

In a state in which the reaction force control circuit 82 is omitted and there is no virtual rack end in the fourth embodiment, a position corresponding to a mechanical rack end at which movement of the rack shaft 32 in the axial direction is regulated with the ball joint 35 abutting against the rack housing 33 is defined as the steering limit.

In each of the embodiments described above, the steering angle θh may be detected directly by a steering angle sensor provided to the steering shaft 12, for example, and the corresponding steered angle θp may be detected directly by a steering angle sensor provided to the first pinion shaft 31, for example.

In the first, second, and third embodiments, the steer-by-wire steering system 2 to be controlled by the steering control device 1 is a linkless steer-by-wire steering system that has a structure in which the steering device 3 and the steering operation device 5 are decoupled from each other. However, the steer-by-wire steering system 2 may be a steer-by-wire steering system in which the steering device 3 and the steering operation device 5 can be mechanically coupled to each other by a clutch.

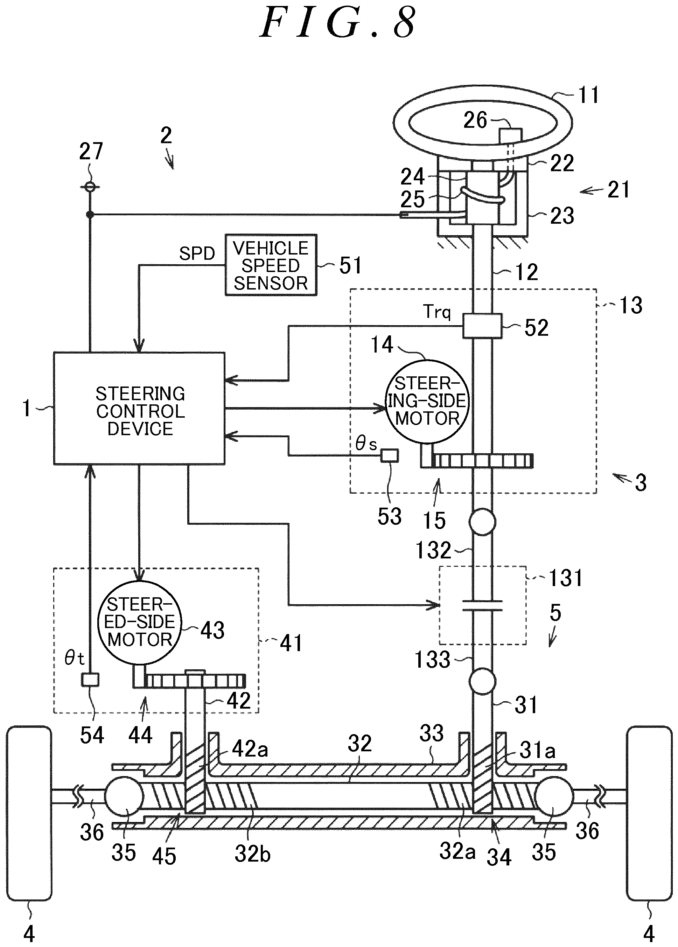

For example, as illustrated in FIG. 8, a clutch 131 is provided between the steering device 3 and the steering operation device 5. The clutch 131 is coupled to the steering shaft 12 via an input-side intermediate shaft 132, and coupled to the first pinion shaft 31 via an output-side intermediate shaft 133. The steer-by-wire steering system 2 is brought into a steer-by-wire mode when the clutch 131 is disengaged by a control signal from the steering control device 1. The steer-by-wire steering system 2 is brought into an electric power steering mode when the clutch 131 is engaged.

In the second and third embodiments, the multiplier 97 multiplies the angular speed deviation Δωh by a value output from the return determination circuit 96, which is zero or one. However, the correction torque Tω* may be multiplied by such an output value, for example.

In the first, second, and third embodiments, the steering-side target current value computation circuit 72 computes the steering-side target current value Is* on the basis of the angle deviation Δθh. However, the present invention is not limited thereto. For example, the steering-side target current value computation circuit 72 may further receive, as an input, an input torque fundamental component (reaction force fundamental component) Tb* computed by the target steering angle setting circuit 71, and compute the steering-side target current value Is*. Specifically, the steering-side target current value computation circuit 72 computes a torque correction value for causing the steering angle θh to coincide with the target steering angle θh* on the basis of the angle deviation Δθh. The steering-side target current value computation circuit 72 computes new corrected input torque by adding the torque correction value to the input torque fundamental component Tb* which has been input. The steering-side target current value computation circuit 72 computes the steering-side target current value Is* on the basis of the new corrected input torque.

In the first, second, and third embodiments, the threshold angle θen which is set in the gain computation circuit 91 and the target steering speed computation circuit 111 may be displaced, as appropriate, from the threshold angle θen for the reaction force control circuit 82, rather than coinciding therewith. For example, the threshold angle θen which is set in the gain computation circuit 91 and the target steering speed computation circuit 111 may be brought closer to the steering angle θre corresponding to the virtual rack end. Alternatively, the threshold angle θen may be displaced toward the steering neutral from the steering angle θre corresponding to the virtual rack end.

In the gain computation circuit 91 and the target steering speed computation circuit 111, in addition, the gain K or the target steering speed ωh* is computed in accordance with the steering angle θh. However, the present invention is not limited thereto. For example, the gain K or the target steering speed ωh* may be computed in accordance with the absolute angle of the steering-side motor 14 or the absolute angle of the steered-side motor 43, which is obtained by converting the rotational angle θs or θt with reference to the steering neutral, or the target steering angle θh*. In this case, the absolute angle of the steering-side motor 14 or the absolute angle of the steered-side motor 43 or the threshold angle of the target steering angle θh* at which the gain K becomes less than one or the target steering speed ωh* starts being less than the absolute value ωc is changed, as appropriate, so as to correspond to the threshold angle θen of the steering angle θh, for example. In addition, the absolute angle of the steering-side motor 14 or the absolute angle of the steered-side motor 43 described above may be detected by an absolute angle sensor.

Further, the characteristics of the gain K and the target steering speed ωh* for the gain computation circuit 91 and the target steering speed computation circuit 111 are not limited to the characteristics illustrated in FIGS. 5 and 6, and may be changed. For example, the variation gradient of the gain K and the target steering speed ωh* in the vicinity of the virtual rack end (region between the threshold angle θen and the steering angle θre corresponding to the virtual rack end) may be set to be larger such that the steering speed ωh becomes lower more quickly when the steering wheel 11 is steered forth toward the virtual rack end.

In each of the embodiments described above, the angular speed control circuit 69 performs feedback control such that the steering speed ωh coincides with the target steering speed ωh*. However, the present invention is not limited thereto. For example, the angular speed control circuit 69 may perform feedback control such that a motor angular speed ωm as an angular speed computed on the basis of the rotational angle θs of the rotary shaft of the steering-side motor 14 coincides with a target motor angular speed ωm* as a target angular speed which is the target value for the motor angular speed com. The target motor angular speed ωm* is determined by multiplying the gain K described above and the motor angular speed com, for example.

In the first, second, and third embodiments, the target steering angle computation circuit 83 uses a model formula that correlates the corrected input torque Trq** and the target steering angle θh* with each other. In the model formula, specifically, a target steering speed obtained by differentiating the target steering angle θh* is used. The angular speed control circuit 69 according to the first, second, and third embodiments computes the target steering speed ωh* by multiplying the gain K which is computed by the gain computation circuit 91 by the steering speed ω, or computes the target steering speed ωh* using a map. However, the correction torque Tω* may be computed on the basis of an angular speed deviation between the target steering speed which is used in the model formula and the steering speed ω.

Alternatively, the model formula may be a model formula modeled with a so-called spring term added thereto, that uses a spring coefficient Kd determined in accordance with the specifications of suspensions, wheel alignment, or the like.

In each of the embodiments described above, the angular speed control circuit 69 is provided to the steering-side control circuit 61. However, the present invention is not limited thereto, and the angular speed control circuit 69 may be provided separately to the steering-side control circuit 61 and the steered-side control circuit 63. Alternatively, the angular speed control circuit 69 may be provided to the steered-side control circuit 63. In the case where the model formula according to the modification described above is used, further, the angular speed control circuit 69 may be provided to the target steering angle computation circuit 83.

In the first, second, and third embodiments, one end side of the rack shaft 32 in the axial direction is supported by the first rack-and-pinion mechanism 34 so as to be reciprocally movable. However, the first pinion shaft 31 may be omitted, and the first rack-and-pinion mechanism 34 may be omitted, for example. In this case, a rack bushing or the like that supports the rack shaft 32 may be provided inside the rack housing 33.

## Claims

1. A steering control device (1) that controls a steering system (2) that includes an actuator (13) to control operation of the actuator (13), the steering control device (1) comprising:
an angular speed control circuit (69) that performs feedback control on the actuator (13) in the case where a steering angle (θh) of the steering wheel (11) reaches a steering limit of the steering angle (θh) and the steering wheel (11) is moved back from the steering limit, the feedback control being performed such that an angular speed (ωh) of a rotational angle of a rotary shaft that is convertible into the steering angle (θh) coincides with a target angular speed (ωh*) that is a target value for the angular speed (ωh) and that is set in accordance with the rotational angle, the angular speed (ωh) being computed on the basis of the rotational angle, **characterized in that**
the actuator (13) generates torque to be applied to a steering wheel (11), and
the steering control (1) device further comprises
a reaction force control circuit (82) that controls the actuator (13) so as to make it more difficult to steer the steering wheel (11) forth toward the steering limit as the steering angle (θh) becomes closer to the steering limit.

2. The steering control device (1) according to claim 1, wherein
the angular speed control circuit (69) performs feedback control on the actuator (13) such that the angular speed (ωh) coincides with a target angular speed (ωh*) that is a target value for the angular speed (ωh) and that is set in accordance with the rotational angle in the case where the steering wheel (11) is steered forth toward the steering limit.

3. The steering control device (1) according to claim 1, further comprising:
a return determination circuit (96) that determines whether the steering wheel (11) is moved back from the steering limit in accordance with steering torque (Trq) applied to the steering wheel (11) and the angular speed (coh), the steering torque (Trq) having a positive value when the steering wheel (11) is steered in a first direction along a steering direction and having a negative value when the steering wheel (11) is steered in a second direction along the steering direction, wherein:
the return determination circuit (96) determines that the steering wheel (11) is moved back from the steering limit when multiplication of the steering torque (Trq) and the angular speed (ωh) results in a negative value; and
the angular speed control circuit (96) performs the feedback control on condition that the return determination circuit (96) determines that the steering wheel (11) is moved back from the steering limit.

## Patentansprüche

1. Lenksteuervorrichtung (1), die ein Lenksystem (2) steuert, das ein Stellglied (13) zur Steuerung eines Betriebs des Stellglieds (13) enthält, wobei die Lenksteuervorrichtung (1)
eine Winkelgeschwindigkeits-Steuerschaltung (69) aufweist, die eine Rückkopplungssteuerung an dem Stellglied (13) in dem Fall durchführt, dass ein Lenkwinkel (θh) des Lenkrads (11) eine Lenkgrenze des Lenkwinkels (θh) erreicht und das Lenkrad (11) von der Lenkgrenze zurückbewegt wird, wobei die Rückkopplungssteuerung so durchgeführt wird, dass eine Winkelgeschwindigkeit (ωh) eines Drehwinkels einer Drehwelle, die in den Lenkwinkel (θh) umwandelbar ist, mit einer Zielwinkelgeschwindigkeit (ωh*) übereinstimmt, die ein Zielwert für die Winkelgeschwindigkeit (ωh) ist und die in Übereinstimmung mit dem Drehwinkel eingestellt wird, wobei die Winkelgeschwindigkeit (ωh) basierend auf dem Drehwinkel berechnet wird, **dadurch gekennzeichnet, dass**
das Stellglied (13) ein Drehmoment erzeugt, das auf das Lenkrad (11) aufzubringen ist, und
die Lenksteuervorrichtung (1) ferner
eine Reaktionskraftsteuerschaltung (82) aufweist, die das Stellglied (13) so steuert, dass das Vorwärtslenken des Lenkrads (11) zur Lenkgrenze erschwert wird, wenn sich der Lenkwinkel (θh) der Lenkgrenze nähert.

2. Lenksteuervorrichtung (1) nach Anspruch 1, wobei
die Winkelgeschwindigkeits-Steuerschaltung (69) eine Rückkopplungssteuerung an dem Stellglied (13) durchführt, so dass die Winkelgeschwindigkeit (ωh) mit einer Ziel-Winkelgeschwindigkeit (ωh*) übereinstimmt, die ein Ziel-Wert für die Winkelgeschwindigkeit (ωh) ist und die in Übereinstimmung mit dem Drehwinkel in dem Fall eingestellt wird, wenn das Lenkrad (11) zur Lenkgrenze vorwärts gelenkt wird.

3. Lenksteuereinrichtung (1) nach Anspruch 1, ferner mit
einer Rückkehrbestimmungsschaltung (96), die bestimmt, ob das Lenkrad (11) in Übereinstimmung mit dem auf das Lenkrad (11) aufgebrachten Lenkdrehmoment (Trq) und der Winkelgeschwindigkeit (ωh) von der Lenkgrenze zurückbewegt wird, wobei das Lenkdrehmoment (Trq) einen positiven Wert hat, wenn das Lenkrad (11) in einer ersten Richtung entlang einer Lenkrichtung gelenkt wird, und einen negativen Wert hat, wenn das Lenkrad (11) in einer zweiten Richtung entlang der Lenkrichtung gelenkt wird, wobei:
die Rückkehrbestimmungsschaltung (96) bestimmt, dass das Lenkrad (11) von der Lenkgrenze zurückbewegt wird, wenn eine Multiplikation des Lenkdrehmoments (Trq) und der Winkelgeschwindigkeit (ωh) einen negativen Wert ergibt; und
die Winkelgeschwindigkeits-Steuerschaltung (96) die Rückkopplungssteuerung unter einer Bedingung durchführt, dass die Rückkehrbestimmungsschaltung (96) bestimmt, dass das Lenkrad (11) von der Lenkgrenze zurückbewegt wird.

## Revendications

1. Dispositif de commande de direction (1) qui commande un système de direction (2) qui comporte un actionneur (13) pour régir le fonctionnement de l'actionneur (13), le dispositif de commande de direction (1) comprenant :
un circuit de régulation de vitesse angulaire (69) qui réalise une commande en boucle fermée sur l'actionneur (13) dans le cas où un angle de braquage (θh) du volant de direction (11) atteint une limite de braquage de l'angle de braquage (θh) et où le volant de braquage (11) est ramené en arrière à partir de la limite de braquage, la commande en boucle fermée étant réalisée de manière qu'une vitesse angulaire (ωh) d'angle de rotation d'un arbre tournant qui est convertible en angle de braquage (θh) concorde avec une vitesse angulaire cible (ωh*) qui est une valeur cible de la vitesse angulaire (ωh) et qui est réglée en fonction de l'angle de rotation, la vitesse angulaire (ωh) étant calculée sur la base de l'angle de rotation, **caractérisé en ce que** :
l'actionneur (13) génère un couple à appliquer à un volant de direction (11), et
le dispositif de commande de direction (1) comprend en outre :
un circuit de régulation de force de réaction (82) qui commande l'actionneur (13) de manière à rendre plus difficile le braquage du volant de direction (11) en direction de la limite de braquage à mesure que l'angle de braquage (θh) se rapproche de la limite de braquage.

2. Dispositif de commande de direction (1) selon la revendication 1, dans lequel :
le circuit de régulation de vitesse angulaire (69) réalise une commande en boucle fermée sur l'actionneur (13) de manière que la vitesse angulaire (ωh) concorde avec une vitesse angulaire cible (ωh*) qui est une valeur cible de la vitesse angulaire (ωh) et qui est réglée en fonction de l'angle de rotation dans le cas où le volant de direction (11) est braqué en direction de la limite de braquage.

3. Dispositif de commande de direction (1) selon la revendication 1, comprenant en outre :
un circuit de détermination de rappel (96) qui détermine si le volant de direction (11) est ramené en arrière à partir de la limite de braquage en fonction du couple de braquage (Trq) appliqué au volant de direction (11) et de la vitesse angulaire (ωh), le couple de braquage (Trq) ayant une valeur positive lorsque le volant de direction (11) est braqué dans un premier sens le long d'une direction de braquage et ayant une valeur négative lorsque le volant de direction (11) est braqué dans un second sens le long de la direction de braquage, dans lequel :
le circuit de détermination de rappel (96) détermine que le volant de direction (11) est ramené en arrière à partir de la limite de braquage lorsque la multiplication du couple de braquage (Trq) et de la vitesse angulaire (ωh) donne une valeur négative ; et
le circuit de régulation de vitesse angulaire (96) réalise la commande en boucle fermée à condition que le circuit de détermination de rappel (96) détermine que le volant de direction (11) est ramené en arrière à partir de la limite de braquage.
